# EUROPEAN PATENT SPECIFICATION

(11) **EP 3 838 375 B1**
(45) Date of publication and mention of the grant of the patent: **18.09.2024**
(21) Application number: 21153447.4
(22) Date of filing: 16.12.2015
(51) Int. Cl.: B01D 35/30, B01D 29/15, B01D 36/00, B01D 35/26, B01D 24/10, B01D 46/42, B01D 35/18, B01D 29/90, B01D 24/00, B01D 24/12, B01D 29/01, B01D 29/11, B01D 29/58

(54) **FILTER CAPSULE APPARATUS**
FILTERKAPSELVORRICHTUNG
APPAREIL À CAPSULE FILTRANTE

(30) Priority: 16.12.2014 US 201414572766
(43) Date of publication of application: 23.06.2021
(62) Divisional of application: 15870982.4
(73) Proprietor: Saint-Gobain Performance Plastics Corporation, Solon, OH 44139 (US)
(72) Inventor: LIN, Zhenwu, Pasadena, NH 91105 (US); LORUSSO, Mark, Portsmouth, NH 03801 (US)
(74) Representative: Zimmermann & Partner Patentanwälte mbB

(56) References cited:
- WO-A1-03/031016
- WO-A2-2012/115991
- DE-U1- 8 704 480

## Description

### FIELD OF THE DISCLOSURE

The disclosure relates to filter capsule apparatus used to enclose filters that separate and remove solid, liquid and/or gaseous contaminants and/or intermix and introduce one liquid or gas into a second liquid or gas. More particularly, the disclosure concerns combined filter shell or housing, enclosed filter and filter capsule inlet and outlet configurations to improve uniform heat transmission of heated or cooled liquids introduced into a filter capsule apparatus, to permit the combined use of loose media and filter membranes and cartridges as well as to improve the serviceability and adaptability to larger assemblies.

### BACKGROUND OF THE DISCLOSURE

To filter liquids and/or gases of undesired contaminants, filters and/or purification media e.g., granular resins, granulated carbon, carbon fiber, soda lime and the like, are used in enclosed filter housings to effectuate contaminant removal. In a common filter capsule configuration, ports are positioned to occupy different planes or extend from the capsule in different directions, such as shown in published application No.: US 2010/0282665. In that application, the inlet and outlet ports are positioned at diametrically opposed locations at the top end of the capsule. This configuration requires a substantial amount of space within a larger assembly to receive the capsule and to secure the ports, which thereby limits the possible orientation variations if a panel mount configuration is desired. It further increases the effort needed to attach the capsule as connections have to be made at two entirely different locations. What is needed is a filter capsule having ports oriented to extend from a capsule in a uniform direction to reduce the space required for attachment to a larger assembly and to facilitate the simultaneous connection of multiple tubes for the ingress and egress of desired fluids and/or gases.

A further problem associated with filter capsules, particularly those with inlet ports located at the tops of the capsules, is post filtration sanitation. The infusion of hot liquids (or even in some applications, the introduction of cooled liquids and/or gases), such as hot water for sanitation processes, results in the formation of a significant temperature gradient whereby liquid introduced into the top end of the filter capsule (the locus of the inlet port), has a much higher temperature than the liquid located at the bottom of the capsule. What is needed is an inlet system that originates from a filter capsule top, but that directs incoming hot (or cooled) liquids to the bottom of the capsule to harness rising heat transfer in the introduced liquids and/or gases to create a significantly more uniform temperature gradient from bottom to top.

A yet further problem results when trying to combine loose particulate (e.g., resin) based filters such as activated carbon with membrane or cartridge based filters constructed from membrane and fibrous type filter media. Loose resin based filter materials such as activated carbon filters are particulate and create flow fields that only permit liquid and/or gas flow in a single direction. The addition of a cartridge based filter with a defined and designated downstream core, positioned downstream of the loose particulate material, further limits the location of an outlet port at a downstream or bottom end of the capsule. For applications with tight spatial requirements, it is not currently possible to position an outlet at the top or upstream end of a capsule when using loose material, e.g., loose particulate based filter media. DE 87 04 480 U1 refers to a pond filter with a filter housing for accommodating filter material and a filter pump, wherein the filter housing is designed at least on the underside in the form of an upwardly open shell made of deep-drawn foil which encloses free-flowing filter material, and on the underside of which a suction inlet to the filter pump is arranged. WO 03/031016 A1 refers to a water treatment tank having bottom, side and top walls defining a space inside the tank, said space containing a bottom layer of gravel and a top layer of a filter material, which is to be consumed by substances in water being treated inside the tank and thus has to be replenished in course of time, a top opening being provided in said top wall for accessing the tank when replenishing said filter material and for inserting a manifold into the tank, said manifold comprising a tubular part having an upper end slidingly connected to a cover, which is tightly mounted in said top opening and has a water duct communicating with the manifold, and having a lower end including a strainer embedded in said bottom layer. What is needed is a filter capsule construction that permits the location of the outlet port at the top of the filter capsule when using loose particular filter media. These and other objects of the disclosure will become apparent from a reading of the following summary and detailed description of the disclosure as well as a review of the appended drawings.

### SUMMARY OF THE DISCLOSURE

The present invention is defined in the claims and concerns a filter capsule apparatus (10^{V}) comprising:
a shell having a shell wall (12^{V}), wherein the shell wall has a top end and a bottom end;
a bottom cap (16^{V}) secured to the bottom end of the shell wall (12^{V});
a top cap (14^{V}) secured to the top end of the shell wall (12^{V}), wherein the combination of the shell wall, the bottom cap and the top cap define a filter chamber, wherein the filter chamber has a chamber bottom end proximal to the bottom cap;
at least one filter cartridge (68) secured in the chamber bottom end, wherein the at least one filter cartridge defines at least one downstream outlet core (70);
a plurality of ports including an and inlet port (24^{V}) and an outlet port (26^{V}) extending from a top end of the top cap (14^{V});
characterized by:
an outlet transfer tube (58) secured in the chamber to the top cap (14^{V}) away from the shell wall (12^{V}) and extending downwardly a portion of the length of the shell wall;
   wherein the transfer tube is connected to, and in fluid communication with, the outlet port (24^{V}) at a top end, and is connected to, and in fluid communication with, the at least one downstream outlet core (70) at a bottom end;
a porous media boundary sheet (72) having a boundary sheet perimeter, wherein the boundary sheet perimeter is secured along its entire length to the shell wall above the at least one filter cartridge (68) and attached about the outlet transfer tube (58), wherein the combination of the media boundary sheet, outer surface of the outlet transfer tube, inner surface of the shell wall and the top cap form a particulate filter media chamber separate from the bottom end of the filter chamber where the at least one filter cartridge (68) is secured, wherein the porous media boundary sheet (72) permits the passage of liquids and/or gases; and,
particulate media (66) secured in the particulate filter media chamber.

### BRIEF DESCRIPTION OF THE DRAWINGS

FIG. 1 is a side elevational view of a filter capsule according to one embodiment which is not part of the invention.
FIG. 2 is a bottom view of the filter capsule embodiment shown in FIG. 1.
FIG. 3 is a perspective view of the filter capsule embodiment shown in FIG. 1.
FIG. 4 is a side elevational view of a filter capsule according to another embodiment which is not part of the invention.
FIG. 5 is a sectional, perspective view of a filter capsule and port fittings according to one embodiment which is not part of the invention.
FIG. 6 is a sectional, perspective view of a filter capsule and port fittings according to another embodiment which is not part of the invention.
FIG. 7 is a sectional perspective view of a filter capsule and ports fittings according to a further embodiment which is not part of the invention.
FIG. 8 is a side elevational view of a filter capsule according to a further embodiment which s not part of the invention.
FIG. 9 is a bottom view of the filter capsule embodiment shown in FIG. 8.
FIG. 10 is a perspective view of the filter capsule embodiment shown in FIG. 8.
FIG. 11 is a sectional, perspective view of the filter capsule and port fittings according to the embodiment of the disclosure shown in FIG. 8.
FIG. 12 is a sectional view in elevation of a filter capsule with aligned ports and a central tube according to the invention.
FIG. 13 is a top view of the filter capsule shown in FIG. 12.
FIG. 14 is a top side perspective view of the filter capsule shown in FIG. 12.
FIG. 15 is a side sectional view in elevation of a filter capsule with a transfer tube and dispersion ring according to a further embodiment which is not part of the disclosure.
FIG. 16 is a top sectional view of the transfer tube and dispersion ring shown in FIG. 15.
FIG. 17 is a side sectional view in elevation of a filter capsule with a transfer tube and a dispersion plate according to yet another embodiment which is not part of the invention.
FIG. 18 is a top view of the transfer tube and dispersion plate shown in FIG. 17.

### DETAILED DESCRIPTION OF THE DISCLOSURE

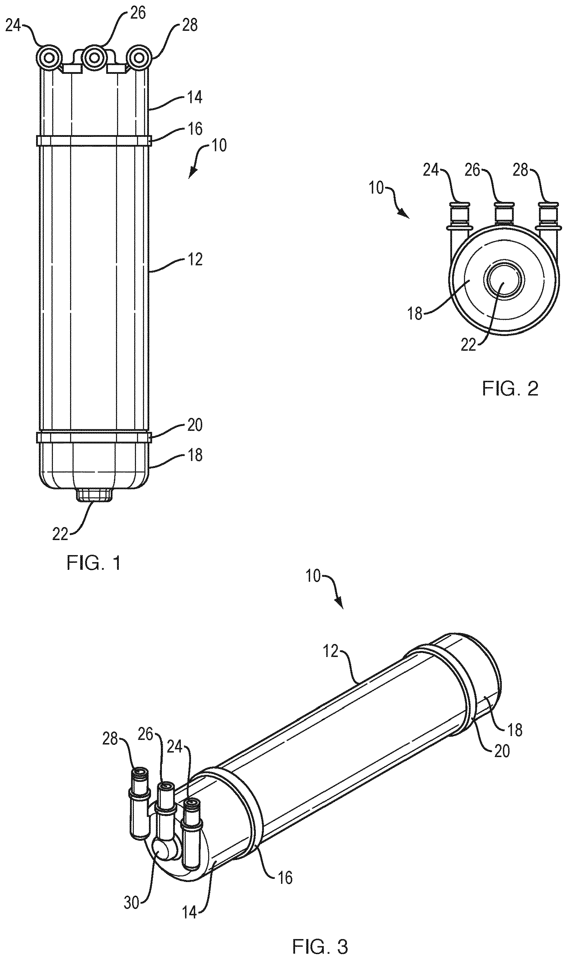

Referring to FIGS. 1-3 and 5-7, a filter capsule apparatus is shown designated generally as 10. Capsule 10 includes a substantially cylindrical body 12 that defines a generally hollow filter chamber configured to hold one or more filter cartridges or filters 34. Capsule 10 may be formed in other regular or irregular geometric shapes to accommodate a wide variety of larger assembly configurations to which the capsule is attached and/or to accommodate a wide variety of filter shape configurations depending upon the application. The capsule is dimensioned so as to provide an uninterrupted annular space about the enclosed filter or filter cartridge 34 to ensure unimpeded flow of fluids along the axial length of the filter cartridge...

To enclose a top end of capsule **10,** a top cap **14** having a substantially cylindrical shape (or other shape depending on the cross-sectional shape of the capsule body) conformed to the shape and dimensions of capsule body 12 and having an enclosed end and an opposing open end is thermally welded to the open end of body **12** to form a top cap joint 16. In an alternative embodiment, body **12** and top cap **14** may be formed with corresponding threaded surfaces or male/female segments as alternative means to secure top cap **14** to body 12. If snap-fit surfaces are used, sealing components, e.g., O-rings with corresponding mounting channels may be used to create an air/fluid tight seal. Adhesives, epoxies and the like may also be used to secure cap **14** to body **12.**

Top cap **14** may be joined to body **12** before or after the installation of filters depending upon whether the other end of body **12** has been closed. In a further alternative embodiment, top cap **14** is formed together with body **12** in the same molding process. In this embodiment a bottom cap, disclosed below, is not formed in the same molding process as top cap **14** and capsule body **12.**

For capsule bodies without an integral bottom, to enclose the bottom end of capsule body **12,** a bottom cap **18** having a substantially cylindrical shape (or other shape depending on the cross-sectional shape of the capsule body) conformed to the shape and dimensions of body **12** and having an enclosed end and an opposing open end is thermally welded to the open end of capsule **10** to form bottom cap joint **20.** In an alternative embodiment, body **12** and bottom cap **18** may be formed with corresponding threaded surfaces or male/female segments as alternative means to secure bottom cap **18** to body **12.** If snap-fit surfaces are used, sealing components, e.g., O-rings may be used to create an air/fluid tight seal. Adhesives, epoxies and the like may also be used to secure bottom cap **18** to body **12.**

Bottom cap **18** may be joined to body **12** before or after the installation of filters depending upon whether the other end of body **12** has been closed, if modular, or closed as part of the formation process of body **12.** In a further alternative embodiment, bottom cap **18** is formed together with body **12** in the same molding process. In this embodiment, a top cap, disclosed above, is not formed in the same molding process as bottom cap **18** and capsule body **12.**

Bottom cap **18** may be formed with a mounting post **22** configured to receive corresponding mounting appendages from a larger assembly such as a mounting panel. The combination of capsule body **12,** top cap **14** and bottom cap **18** form capsule **10.**

In a further alternative embodiment, in place of mounting post **22,** a drainage port may be formed in bottom cap **18** to allow fluids to be drained from the bottom end of capsule **10** without the need to engage a port formed in top cap **14** dedicated as an outlet port as more fully described below. The drainage port may be configured with a male or female connector end and may also include quick connect fittings and a modular or integrated check valve to prevent the unwanted flow of fluids and/or gases from the capsule.

Formed on, integral with, or appended to, top cap **14,** are a plurality of ports configured for connection to, and to provide fluid communication with, liquid/gas delivery and/or extraction sources. The ports may be formed with appendages, annular channels, etc., to receive sealing components, e.g., O-rings. More specifically, a cannula-shaped, essentially hollow, inlet port **24** is formed on, or secured to, a lateral edge of top cap **14** to provide a means to infuse fluids and/or gases into the filter chamber formed within capsule **10.** The location of the interface/juncture of inlet port **24** with top cap **14** may be positioned at other locations about the cap other than the lateral edge of top cap **14.**

Inlet port **24** includes modular or integral male or female fittings to accommodate and receive corresponding fittings **38** of fluid delivery tubes or channels to allow fluids and/or gases to traverse the tube/port juncture in an essentially leak free, airtight manner. Inlet port **24** may also include an integral or modular check valve to prevent the release of fluids or spillage when capsule **10** is disassembled to remove, replace or service the internal filter(s).

Formed on, integral with, or appended to, a lateral edge of top cap **14** opposite the lateral edge occupied by inlet port **24** is a cannula-shaped, essentially hollow, vent port **28.** Vent port **28** is formed on, or secured to, top cap **14** to provide a means of egress for unwanted liquids and/or gases present in the filter chamber defined by capsule **10.** The location of the interface/juncture of outlet port **28** may be positioned at other locations about the cap other than a lateral edge of top cap **14.**

Vent port **28** is initially opened to vent out resident gas when capsule **10** is being filled with the desired liquid and/or gas. Vent port **28** is otherwise closed during normal operation, or periodically opened for limited periods of time to allow the release of unwanted accumulated air and/or gas in the filter chamber.

Vent port **28** includes modular or integral male or female fittings to accommodate and receive corresponding fittings **38** of fluid receiving tubes or channels to allow fluids and/or gases to traverse the tube/port juncture in an essentially leak free, airtight manner. Vent port **28** may also include an integral or modular check valve to prevent the release of fluids or spillage when capsule **10** is disassembled to remove, replace or service the internal filter(s).

Also appended to top cap **14** is outlet port **26.** Outlet port **26** may be formed on, integral with, or appended to, top cap **14** at essentially the center of cap **14.** A cylindrical projection **30** may be formed as an interface between top cap **14** and outlet port **26.** Projection **30** forms a chamber above the plane occupied by the top surface of top cap **14** that allows the flow of air, gas or fluids to collect in the chamber and migrate out of capsule **10** after being purified through the enclosed filter. It is particularly advantageous in fluid-based applications to allow the collection and elimination of any unwanted air and/or gas that may have entered the capsule. Should particulate matter pass through filter **34,** chamber **30** provides an area for the particulate matter to collect so as to minimize any impediment the particulate matter may have on the egress of fluids and/or gases out of capsule **10.**

This configuration further allows capsule **10** to be completely filled with a desired fluid and/or gas up to the highest point of the enclosed filter to ensure full utilization of the entire filter. In this manner, utilization of substantially the entire chamber area dedicated to housing one or more filters can be maximized for the intended purpose. Projection **30** further does not impact the overall capsule length as the desired length can be maintained by adjusting the outlet height to match the heights of the inlet and vent ports that may be longer when projection **30** is incorporated into top cap **14.**

Outlet port **26** includes modular or integral male or female fittings to accommodate and receive corresponding fittings **38** of fluid receiving tubes or channels to allow fluids and/or gases to traverse the tube/port juncture in an essentially leak free, airtight manner. Outlet port **26** may also include an integral or modular check valve to prevent the release of fluids or spillage when capsule **10** is disassembled to remove, replace or service the internal filter(s).

It should be understood that the flow of fluids and/or gases through the various ports can be reversed without any reduction in function of the filter capsule. More specifically, what has been identified as inlet port **24** may function as an outlet port and what has been identified as outlet port **26** may function as an inlet port. In addition, what has been identified as vent port **28** may be utilized as either an inlet, or an outlet, port. The apparatus is designed to permit functional flow in either direction.

In this aspect, ports **24, 26, 28** are oriented in substantially the same plane wherein each port extends laterally from capsule **10** at an angle substantially orthogonal to a longitudinal axis of capsule **10.** Alternatively, the ports may align with, or be parallel to, the orthogonal axis, or form an angle with the longitudinal axis about +/- 45 ° from the orthogonal orientation. The ports may or may not occupy the same plane and instead, be offset to accommodate attachment to larger customized assemblies.

In a yet further alternative, each port may have a stem portion extending from top cap **14** substantially parallel with the longitudinal axis of capsule **10** and a distal portion continuous with the stem portion that deviates from the parallel orientation with the capsule longitudinal axis. The distal portion forms an angle with the stem portion wherein the distal portion occupies a plane substantially orthogonal to the capsule longitudinal axis. Alternatively, the distal portions may form an angle with the longitudinal axis of the capsule about +/- 30 ° from the orthogonal orientation. The stem portion length can be varied to control the overall length of the capsule.

Referring again to the configuration wherein the ports extend laterally from the top cap **10,** this configuration reduces the overall height of the apparatus to enable the apparatus to fit within tight dimensional portions of larger assemblies without any appreciable diminishment in the amount of capsule space dedicated to house one or more filters. The substantially unidirectional port orientation also facilitates installation onto, or into, larger assemblies, particularly panel mount assemblies, as all connection surfaces, i.e., ports face substantially the same direction. The addition of quick couplings further eases installation. A yet further advantage is experienced as the location of all the ports at substantially the highest point of capsule **10** allows for removal of the lower-positioned enclosed filters substantially without spillage.

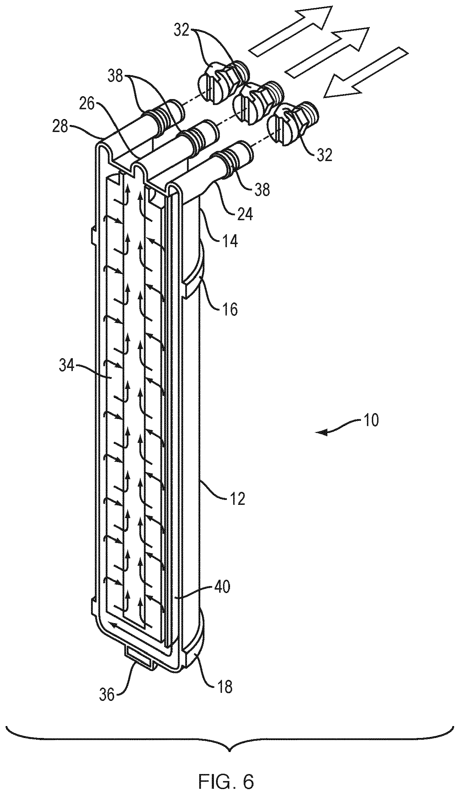

In another aspect as shown in FIG. 6, a transfer tube **40** is formed integral with, or appended to, an inside wall of capsule **10** to provide a channel for delivering warm and/or cold liquids and/or gases from a top end of capsule **10** to a bottom end of the capsule without requiring the liquid and/or gas to first migrate through the filter chamber. A top end of the transfer tube is connected to, and in fluid communication with, inlet port **24.** If the middle port **26** should be designated as the inlet port, tube **40** would be connected to that port to provide the desired function described below. A bottom end of the transfer tube is open to, and in fluid communication with a bottom end of the filter chamber formed and defined by capsule **10.** The bottom end of the transfer tube is positioned in close proximity to the bottom end of the filter chamber to introduce fluids at the lowest point in the filter chamber. This maximizes the beneficial effect of the transfer tube to deliver hot liquids into the chamber and allow the rising heat to minimize the development of a temperature gradient along the length of capsule **10.**

As shown in FIG. 6, fluid introduced into the capsule via inlet port **24** flows to the bottom of capsule **10** via tube **40** and flows up through the uninterrupted annular space formed between the inner wall of capsule **10** and the outer cylindrical wall of filter **34.** The fluid then traverses the filter toward the center of capsule **10** and up and out through outlet port **26.** With this configuration, heated or cooled fluids or gases introduced into capsule **10** flow to the bottom of the capsule first before entering into the filter. In this manner, normal heat dynamics cause the heated fluids/gases to rise up the chamber and dissipate heat, or promote cooling. The continual transfer of heated or cooled liquids/gases into the bottom of the capsule while previously introduced fluids exit transfer tube **40** and rise up the capsule creates a counter-current effect that minimizes the heat gradient differential from the top to the bottom of the capsule.

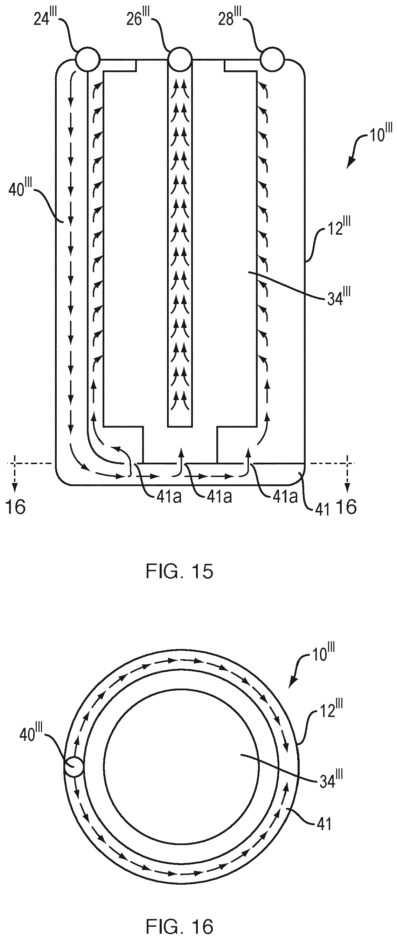

In a further aspect as shown in FIGS. 15 and 16, a filter capsule shown generally as **10‴** includes a housing **12‴** that defines a filter chamber within which a filter **34‴** is secured. The capsule has an inlet port **24‴,** and outlet port **26‴** and an optional vent port **28‴.** A transfer tube **40‴** extends from a top end of the capsule to a point or plane proximal to the bottom and is in fluid communication with inlet port **24‴.** Formed or positioned in a bottom end of the filter chamber is a dispersion ring **41** that defines a channel about the perimeter of the filter chamber bottom end. The channel is in fluid communication with transfer tube **40‴.** A plurality of bores or slots **41a** are formed in dispersion ring **41** to permit the flow of liquids and/or gases (heated or cooled) introduced into transfer tube **40‴** via inlet port **24‴** to flow about the bottom end of the filter chamber in a uniform manner to ensure the liquids and/or gases flowed into the chamber substantially simultaneously from all sides of the filter chamber are substantially uniform in temperature.

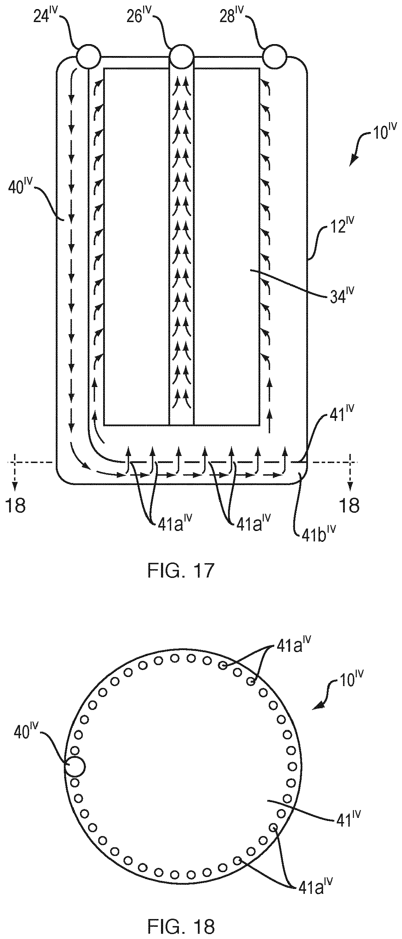

In a yet further aspect as shown in FIGS. 17 and 18, a filter capsule shown generally as **10^{iv}** includes a housing **12^{iv}** that defines a filter chamber within which a filter **34^{iv}** is secured. The filter chamber is dimensioned to ensure an uninterrupted annular space is maintained about filter **34^{iv}** to permit the unimpeded flow of liquids along the axial length of the filter. The capsule has an inlet port **24^{iv},** and outlet port **26^{iv}** and an optional vent port **28^{iv}.** A transfer tube **40^{iv}** extends from a top end of the capsule to a point or plane proximal to the bottom and is in fluid communication with inlet port **24^{iv}.** Formed or positioned in a bottom end of the filter chamber is a dispersion plate **41^{iv}** that defines a dispersion chamber **41b** at the bottom end of the filter chamber. Chamber **41b** is in fluid communication with transfer tube **41^{iv}.** A plurality of bores or slots **41a^{iv}** are formed about the perimeter of plate **41^{iv} to** permit liquids and/or gases introduced into the chamber to exit up into the portions of the chamber surrounding the enclosed filter **34^{iv}.** It should be understood that the bores may also be formed within any part of the field of the dispersion plate to permit fluids to exit the chamber and travel up into the filter chamber. Location of the bores about the perimeter of the dispersion plate is particularly advantageous if the enclosed filter is secured at its bottom end to the dispersion plate, or to the bottom of housing **12^{iv}.** Should the filter be secured to the inner surface of the bottom of the housing, the dispersion plate can be formed as a ring about the bottom end of the filter/filter cartridge dedicated to secure the filter/filter cartridge to the housing. In this configuration, the dispersion chamber will be annular in shape and will have a series of bores about the entire plate to ensure uniform delivery of heated or cooled fluids, the temperature of which is maintained substantially uniform about the dispersion chamber and the filter/filter cartridge. The filter cartridge/filter may be secured to the bottom of the filter capsule or dispersion plate with friction fit components, O-ring(s), thermal or sonic bonding, adhesives, combinations of the joining methods and the like.

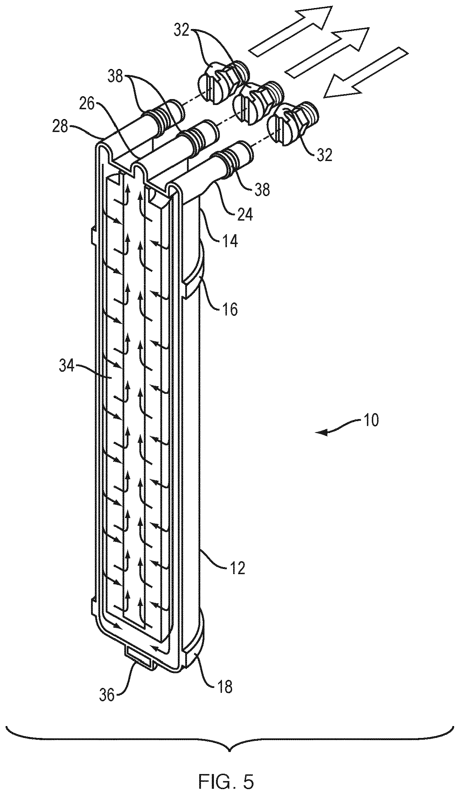

Referring again to FIG. 6, transfer tube **40** avoids the creation of significant thermal gradients that would occur without the presence of transfer tube **40.** Without tube **40,** fluid introduced into capsule **10** would follow the flow pattern illustrated in FIG. 5. The fluid would enter the capsule from the top, flow down the capsule via gravity feed and traverse filter **40** while flowing down the capsule. Once the fluid flowed through the filter, it would enter the center of capsule **10** and flow out outlet **26.** In this configuration, any heated liquid or gas introduced into the capsule would lose heat as it travels down the capsule (via gravity or pressure assist) and flows into filter **34.** In doing so, a relatively large temperature gradient is created whereby the fluid at the top of capsule **10** would have a much higher temperature than the fluid at the bottom of capsule **10.**

To achieve a specific fluid temperature or target temperature at the bottom of capsule **10,** fluid introduced into the capsule from a top end would have to have a higher temperature than the target temperature to account for heat loss as the heat transfers to fluid toward the bottom of the capsule. This is particularly problematic when the fluid introduced into the capsule is intended to act as a cleaning and/or sanitization fluid with a required temperature. When the liquids or gases reach the bottom of the capsule housing, the constant transfer of heat up the housing chamber will lead to an unacceptably low liquid or gas temperature at the bottom of the housing that can prevent proper cleaning and/or sanitization of the enclosed filter cartridge/filter.

Use of transfer tube **40** substantially eliminates these problems by harnessing well known fluid thermal dynamic properties pursuant to which fluid seeks to reach thermal equilibrium by transferring heat from relatively high heat, relatively low density fluid to fluid having relatively low heat and relatively high density. By introducing the relatively high heat liquids and/or gases at the bottom of the capsule housing, relatively lower temperature, denser liquids positioned at a higher elevation than the introduced high heat liquid or gas, will result in heat transfer up into the cooler liquid and prevent the creation of a significant temperature gradient as well as prevent the presence of any liquid or gas at an unacceptably relatively low temperature throughout the capsule. These are the conditions that become extant in a filter capsule when fluid having relatively high heat and relatively low density is introduced into the bottom of the capsule. The heat transfers naturally and more efficiently when travelling from the bottom to the top of the capsule. In this manner, the fluid in the capsule is maintained at a much more uniform temperature along the entire length of the capsule as heat transfers up the enclosed fluid.

In an alternative embodiment, to further minimize the temperature gradient, a check valve can be formed integral to, or installed within a distal end of, transfer tube **40** to prevent backflow of the fluid and/or gas up the transfer tube and into inlet port **24.** This ensures any heated fluid introduced into the capsule reaches the bottom of the capsule so as to maintain maximum heat uniformity and efficiency.

In a further embodiment, the transfer tube is formed on an outside surface of capsule **10** A top end of the tube is connected to, and in fluid communication with, inlet port **24.** A bottom end of the tube is connected to a bore formed in either a bottom end of capsule body **12,** or a side wall of bottom cap **18** so as to provide fluid communication with the bottom interior of capsule **10** and permit fluid entry into the capsule at the lowest point of the filter chamber defined by the capsule.

With the use of the transfer tube positioned outside the filter capsule housing wall, embedded in the wall, or formed on, or attached to, the inner surface of the housing wall, liquids and/or gases, and heated liquids and/or gasses in particular, can be introduced into the filter chamber at substantially the bottom-most end of the filter chamber to allow the heat introduced into the chamber to flow up into the higher layers of fluid and/or gas to ensure a relatively uniform temperature gradient. Prior art systems have the top-mounted inlet ports configured to channel fluids and/or gasses into the uppermost end of the filter chamber which causes the formation of substantial temperature gradients as the cooler, more dense fluid and/or gas tends to migrate to the bottom of the chamber while the hotter, less dense fluid and/or gas tends to remain in the upper end of the chamber.

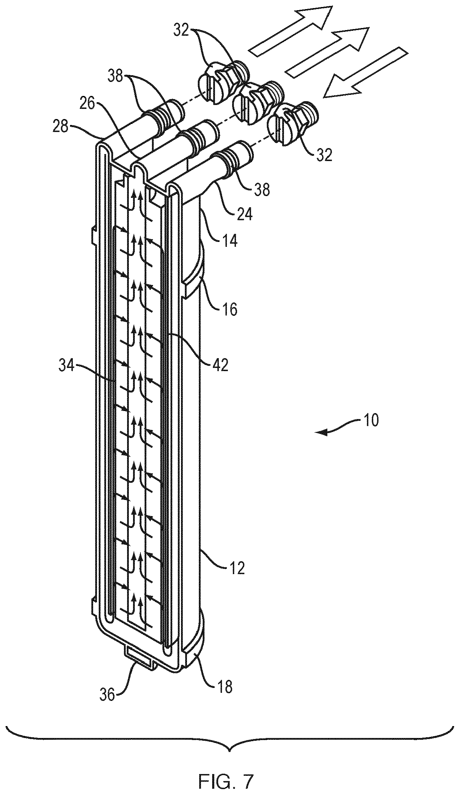

In another aspect as shown in FIG. 7, an encapsulating shield **42** is formed in the annular cavity between filter **34** and the inner wall of capsule **10.** The upper end of shield **42** creates a partition between the three ports so that each is isolated from the others. A bottom end of shield **42** does not extend to the bottom of capsule **10** so as to provide a fluid path between the two annular chambers formed by the presence of shield **42.** A first chamber **43** is formed between the inner wall of capsule **10** and the outer wall of shield **42.** A second chamber **45** is formed between the inner wall of shield **42** and the outer wall of filter **34.**

Fluid introduced into the capsule flows from the inlet port **24** into first annular chamber **43.** The fluid flows down the first annular chamber until reaching the bottom of capsule **10.** The flow then traverses the end of shield **42** and flows up into second annular chamber **45** from which the fluid enters into and traverses the filter. The fluid next flows out of the filter into the central chamber and out the outlet port **26.** In this configuration, vent port **28** must be closed to ensure the flow follows the stated path through the annular chambers and out the outlet port.

The use of shield **42** established a countercurrent of flow that allows the some of the heat from the higher temperature fluid in first annular chamber to transfer through shield **42** (particularly if the shield is constructed from materials having good heat transmission such as aluminum) into the upwardly flowing and lower-temperature fluid in second annular chamber **45.** This heat exchange enables the fluid to achieve a relatively uniform temperature gradient as the highest temperature fluid at the very top in first chamber **43** will transfer heat to the coolest fluid at the top of second chamber **45.** The next highest temperature fluid below the hottest fluid at the top will transfer heat to the next coolest level of fluid in the second chamber until the fluid reaches the bottom of the shield where the temperature of the fluid on either side of the bottom of shield **42** is approximately equivalent. If heat transfer through shield **42** is undesirable, shield **42** may be constructed from poor heat conducting materials as are well known in the art.

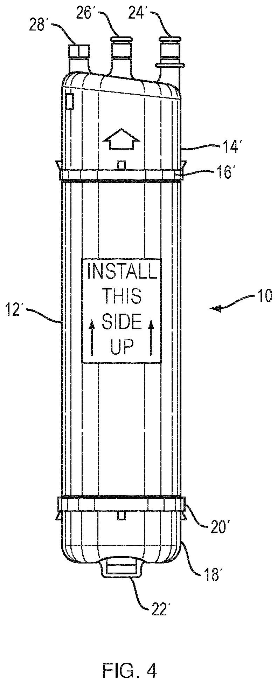

In a yet further aspect as shown in FIG. 4, a filter capsule **10'** is formed with, or has appended thereto, a plurality of ports that extend substantially upwardly from a top surface of a top cap **14'.** It should be understood that elements referenced with primed numbers in one embodiment correspond to elements in other embodiments with the same unprimed or differently primed numbers. Capsule **10'** includes a substantially cylindrical body **12'** that defines a generally hollow filter chamber configured to hold one or more filters. Capsule **10'** may be formed in other regular or irregular geometric shapes to accommodate a wide variety of larger assembly configurations to which the capsule is attached and/or to accommodate a wide variety of filter shape configurations depending upon the application.

To enclose a proximal, top end of capsule body **12',** a top cap **14'** having a substantially cylindrical shape conformed to the shape and dimensions of capsule body **12'** and having one enclosed end and an opposing open end is thermally welded to the proximal end of capsule body **12'** to form a top cap joint **16'.** In an alternative embodiment, capsule body **12'** and top cap **14'** may be formed with corresponding threaded surfaces or male/female segments as alternative means to secure top cap **14'** to capsule body **12'.** If snap-fit surfaces are used, sealing components, e.g., O-rings may be used to create an air/fluid tight seal. Top cap **14'** may be joined to capsule body **12'** before or after the installation of filters depending upon whether the other end of capsule **10'** has been closed.

To enclose a distal, bottom end of capsule **10',** a bottom cap **18'** having a substantially cylindrical shape conformed to the shape and dimensions of capsule boy **12'** and having an enclosed end and an opposing open end is thermally welded to the distal end of capsule body **12'** to form bottom cap joint **20'.** In an alternative embodiment, capsule body **12'** and bottom cap **18'** may be formed with corresponding threaded surfaces or male/female segments as alternative means to secure bottom cap **18'** to capsule body **12'.** If snap-fit surfaces are used, sealing components, e.g., O-rings may be used to create an air/fluid tight seal. Like top cap **14',** bottom cap **18'** may be joined to capsule body **12'** before or after installation of filters depending upon whether the other end of capsule **10'** has been closed. Bottom cap **18'** may be formed with a mounting post **22'** configured to receive corresponding mounting appendages from a larger assembly such as a mounting panel.

In an alternative embodiment, in place of mounting post **22',** a drainage port may be formed in bottom cap **18'** to allow fluids to be drained from the bottom end of capsule **10'** without engaging a port formed in top cap **14'** dedicated as an outlet port as more fully described below. The drainage port may be configured as a male or female connector and may also include quick disconnect fittings and a modular or integrated check valve.

Formed on, or appended to, top cap **14',** are a plurality of ports configured to provide fluid communication with fluid delivery or extraction sources. A cannula-shaped inlet port **24'** is essentially hollow and formed on, or secured to, a lateral edge of top cap **14'** to provide a means to infuse fluids and/or gases into the filter chamber contained in capsule **10'.** The location of the interface/juncture of inlet port **24'** may be positioned at other locations other than a lateral edge of top cap **14'.**

Inlet port **24'** includes modular or integral male or female fittings to accommodate and receive corresponding fittings of fluid delivery tubes or channels to allow fluids and/or gases to traverse the tube/port juncture in an essentially leak free, airtight manner. Inlet port **24'** may also include an integral or modular check valve to prevent the release of fluids or spillage when capsule **10'** is disassembled to remove, replace or service the internal filter(s).

Formed on, or appended to, a lateral edge of top cap **14'** opposite the lateral edge occupied by inlet port **24'** is a cannula-shaped vent port **26'.** Vent port **28'** is essentially hollow and formed on, or secured to, top cap **14** to provide a means of egress for undesired fluids and/or gases present in the filter chamber contained in capsule **10'.** It also provides a means to register the internal pressure of capsule **10'** to ambient pressure conditions. The location of the interface/juncture of vent port **26'** may be positioned at other locations other than a lateral edge of top cap **14'.**

Vent port **26'** includes modular or integral male or female fittings to accommodate and receive corresponding fittings of fluid receiving tubes or channels to allow fluids and/or gases to traverse the tube/port juncture in an essentially leak free, airtight manner. Vent port **26'** may also include an integral or modular check valve to prevent the release of fluids or spillage when capsule **10'** is disassembled to remove, replace or service the internal filter(s).

Also appended to top cap **14'** is a cannula-shaped outlet port **28'.** Outlet port **28'** may be formed on, or appended to, top cap **14'** at essentially a center of cap **14'.** A cylindrical projection **30'** may be formed as an interface between top cap **14'** and outlet port **28'.** Projection **30'** provides an enclosed area above the plane of top cap **14'** to allow air, or other unwanted substances or gases to rise and concentrate for release through outlet port **28'.** This configuration allows capsule **10'** to be completely filled with a desired fluid and/or gas without compromising any area of the chamber formed by capsule **10'** dedicated to housing filters in a desired fluid and/or gas.

Outlet port **28'** includes modular or integral male or female fittings to accommodate and receive corresponding fittings of fluid receiving tubes or channels to allow fluids and/or gases to traverse the tube/port juncture in an essentially leak free, airtight manner. Outlet port **28'** may also include an integral or modular check valve to prevent the release of fluids or spillage when capsule **10'** is disassembled to remove, replace or service the internal filter(s).

In this aspect, ports **24', 26', 28'** are oriented in substantially the same plane wherein each port extends vertically or upwardly from capsule **10'** wherein the occupied plane by the ports is substantially parallel to a longitudinal axis of capsule **10'.** Alternatively, the ports may occupy a plane that forms an angle with the longitudinal axis that is about +/- 45 ° from the parallel orientation. In a further alternative embodiment, the ports may or may not occupy the same plane and instead, be offset to accommodate attachment to larger customized assemblies.

This configuration with substantially uniform port orientations whereby the ports extend substantially vertically from the top of capsule **10'** does not reduce the overall height of the apparatus, but facilitates the manual connection to mated fittings when the mated fittings are not panel mounted. The addition of quick couplings further eases installation. And the location of all the ports at substantially the highest point of capsule **10'** allows for removal of the contained filters without spillage.

In another aspect, a transfer tube **40'** is formed integral with, or appended to, an inside wall of capsule **10'** to provide a channel for delivering warm fluids and/or gases from a top end of capsule **10'** to a bottom end of capsule **10'** without requiring the fluid and/or gas to flow through the filter chamber. A top end of the transfer tube is connected to, and in fluid communication with, inlet port **24'.** A bottom end of the transfer tube is open to, and in fluid communication with, a bottom end of the filter chamber formed by capsule **10'** to permit the entry of fluid into the chamber at the lowest point in the chamber. In an alternative embodiment, a check valve can be formed integral to, or installed within a distal end of transfer tube **40'** to prevent backflow of the fluid and/or gas up the transfer tube and into inlet port **24'.**

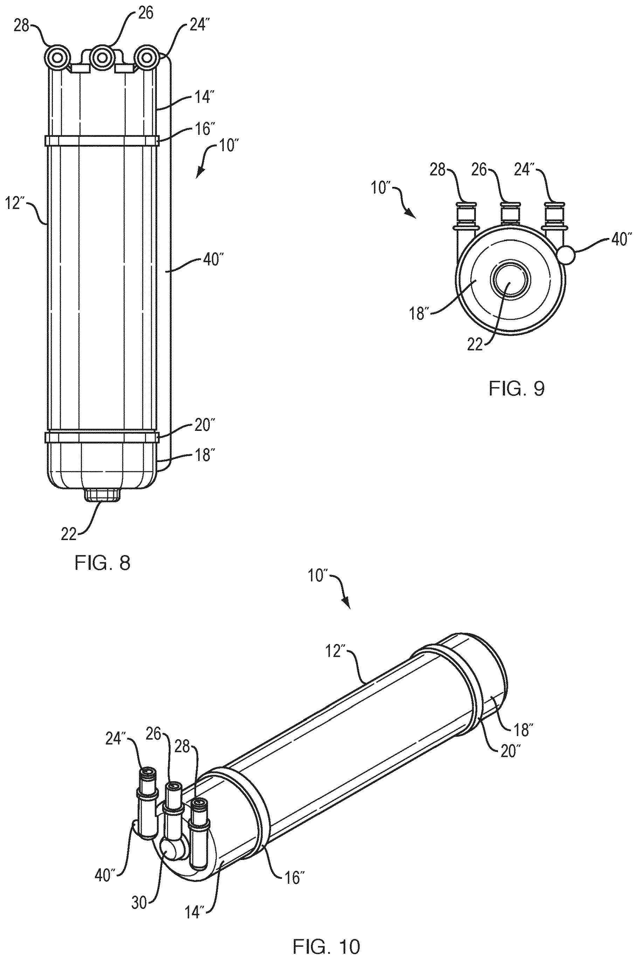

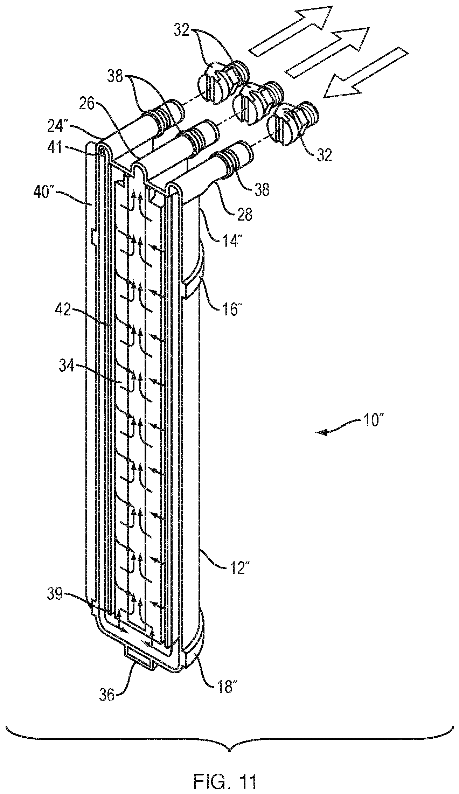

In a further embodiment, as shown in FIGS. 8-11, an exterior transfer tube **40"** is formed on an outside surface of a capsule **10".** A top end of the tube is connected to, and in fluid communication with, an inlet port **24"** via a top bore **41.** A bottom end of the tube is connected to a bore **39** formed in either a bottom end of capsule **10",** or a side wall of a bottom cap **18"** so as to provide fluid communication with the interior of capsule **10".**

With the use of external transfer tube **40",** fluids and/or gases, and heated fluids and/or gasses in particular, can be introduced into the filter chamber at substantially the bottom most end of the filter chamber to harness the natural tendency of heated, and therefore, less dense, fluids and/or gases to rise so as to allow the heat introduced into the chamber to transfer up into the higher layers of fluid and/or gas to ensure a relatively uniform temperature gradient. Prior art systems have the top mounted inlet ports channeling fluids and/or gasses into the uppermost end of the filter chamber that causes substantial temperature gradients to form as the cooler fluid and/or gas tends to migrate to the bottom of the chamber while the hotter fluid and/or gas tends to remain in the upper end of the chamber.

In a yet further aspect, an RFID chip **36** is attached to, or embedded in, a bottom portion of bottom cap **18.** In an alternative embodiment, the bottom of capsule 10 is formed as an integral part of the capsule with chip **36** embedded in the capsule forming material during manufacture. Chip **36** is embedded so as not to have any exposure to fluid or gas either inside or outside capsule **10,** and to ensure the chip is not lost or improperly replaced with an unauthorized chip such as is possible with chips secured to items with adhesive and the like. Chip **36** is configured to endure high temperature environments and is rated for high temperatures. With this configuration, chip **36** can be exposed to the high temperatures of hot water sanitation processes.

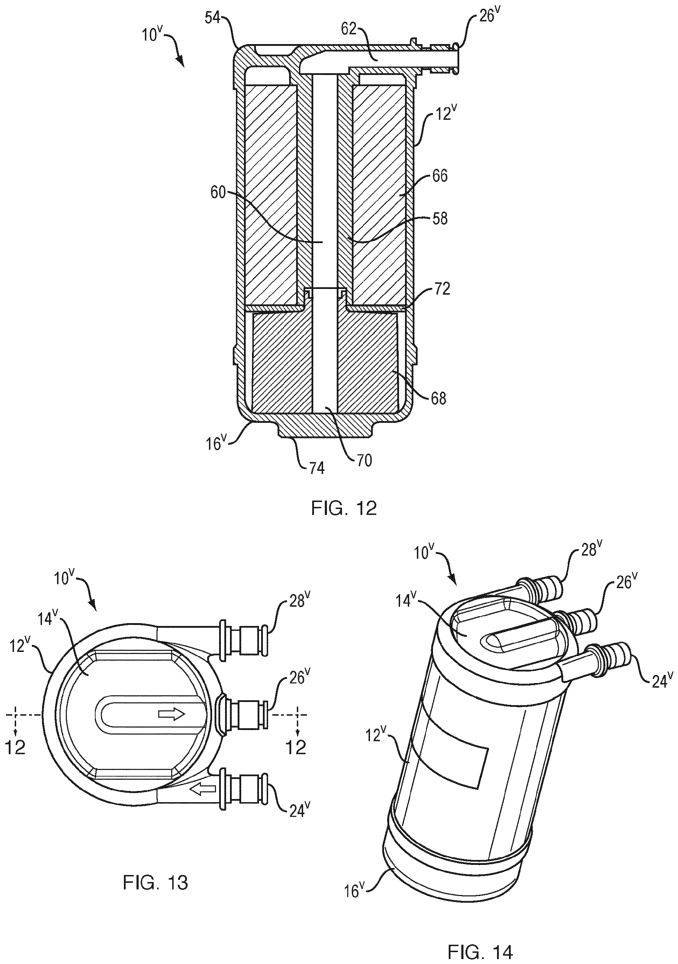

Referring now to FIGS. 12-14, according to the invention, a filter capsule shown designated generally as **10^{v}** includes a capsule housing or shell wall **12^{v},** an upper end or end cap **14^{v}** and a lower end or end cap **16^{v}.** The combination of the shell wall and end caps defines a filter chamber within which is secured a filter cartridge or filter material as disclosed below. The end caps may be integral to, or modular with, the shell wall. Additional variations include one end being integral with the shell wall and the other and end cap secured to the shell wall. Any combination of integral or modular ends/end caps are within the spirit and scope of the disclosure. The means used to secure the end caps to the shell wall are those disclosed herein for other embodiments of the disclosure.

An inlet port **24^{v}** extends radially from top end **14^{v}** and may be formed to receive fittings such as quick connects. An outlet port **26^{v}** extends radially from top end **14^{v}** and is positioned with a proximal end substantially centrally located on the top end. An optional vent port **28^{v}** also extends radially from top end **14^{v}** in substantially the same plane occupied by inlet port **24^{v}** and outlet port **26^{v}.** All of the ports may be formed to receive fittings such as quick connects and the like as disclosed for other embodiments of the disclosure.

Extending downwardly and in fluid communication with the proximal end of outlet port **26^{v}** is outlet transfer tube **58** that defines an outlet channel **60.** Outlet tube **58** is configured to extend only partially down the overall length of the capsule chamber and is nonporous. A filter cartridge or membrane **68** is positioned in the end of the capsule chamber opposite the end from which the ports extend. Filter membrane **68** defines a filter membrane core **70** in fluid communication with outlet channel **60.** The combination of core **70** and outlet tube channel **60** provide a continuous downstream path for fluid and/or gas flow through the capsule housing from a bottom end of the capsule to the top.

For purposes of illustration and not limitation, for liquid processing applications, the filter material or media in the filter cartridge or membrane **68** (also broadly defined as filter material or media) may be formed from materials selected from the group consisting of polyethersulfone, nylon, cellulose acetate, cellulose nitrate, polyvinylidene fluoride, polycarbonate, polyacrylonitrile, mixed esters of cellulose, glass fiber, polyethylene, polytetrafluoroethylene and combinations thereof. Other filter materials well known in the art may also be used for this purpose and be within the scope of this disclosure.

Again for purposes of illustration and not limitation, for gas processing applications, the filter material or media in the filter cartridge or membrane **68** may be formed from materials selected from the group consisting of polyvinylidene fluoride, glass fiber, polyethylene, polytetrafluoroethylene and combinations thereof. Other filter materials well known in the art may also be used for this purpose and remain within the scope of this disclosure.

It should be understood further that any of the members of these two sets of materials may be used with their natural surface properties, or may be modified completely or partially to accommodate the material for use with liquids and/or gases. For example, one member of the illustrative list for gas applications may have its surface altered to accommodate its use with liquids. Multiple combinations of the listed materials from both sets are also possibilities for material selection. Moreover, a material identified as being particularly advantageous for gas applications may, for example, in some instances, be useful for liquid applications and vice versa.

The filter material or media in the filter cartridge or filter membrane **68** may be formed with pores ranging in size from about 0.2 microns to about 500 microns. Filter **68** may also be a HEPA (high efficiency particulate air) or an ULPA (ultra low particulate air) filter as is known in the art.

Although shown as a single cartridge **68,** multiple cartridges **68** may be secured in the bottom end of housing **10^{v}** in stacked or multi-round configurations with the multiple cores **70** joined together for stacked configurations, or with a manifold **90** that connects to, and is in fluid communication with, outlet tube **58** for multi-round configurations. The cartridges may be constructed from similar filtering materials, (membranes and other media) with similar characteristics, e.g., pore size porosity, etc.), or may differ as to materials and/or characteristics to impart selectable filtering properties tailored to a specific application. The entire apparatus may use purely gravitational force to filter incoming liquids and gases, or may use pressure to facilitate the filtering process.

A media boundary sheet **72** is positioned above filter membrane to keep loose particulates and media in a designated place separate from the cartridge filter **68** and secured to the walls of the capsule chamber as well as to outlet tube **58.** Boundary sheet **72** functions as a mechanical boundary to prevent loose media material from clogging the pores of filter membrane **68.** Boundary sheet **72** is porous to permit the passage of liquids and/or gases processed through the filter capsule. The pore sizes for boundary sheet **72** may be from about 10 microns to about 500 microns. The combination of the capsule chamber, upper end **14^{v},** boundary sheet **72** and a radially outer wall of outlet tube **58** define a toroidal chamber within which is placed loose media based filter material **66.** Filter material **66** may be selected from the group consisting of DI resin, carbon fiber cotton fiber granular carbon, polymeric yarn, sand or other natural or synthetic granular media and combinations thereof.

Capsule **10^{v}** is designed to operate in a pressurized system with pressures ranging up to about 100 psi. For liquid and/or gas filtration, the subject liquid and/or gas is flowed into inlet port **76** and into a top end of capsule **10v.** The fluid and/or gas percolates through filter resin **66** and into filter membrane **68** via boundary layer **72.** The fluid and/or gas flows through filter membrane **68** and enters filter membrane core **70** and flows up into outlet tube channel **60** and out outlet port **64.**

The capsules, caps, tubes and ports described herein may be constructed from high heat resilient plastics, such as polypropylene, polyethylene, nylon, PFA and the like. The materials are used in conventional injection molding processes to create the capsules and related components. A key consideration for material selection is the material's ability to withstand high heat environments such as those found in sterilization equipment and autoclaves, as well as other sterilization means like gamma irradiation.

The quick couplings are configured to be compatible with coupling components manufactured and sold by, by way of example and not limitation, Linktech (Ventura, California), Colder Plastics Company (St. Paul, Minnesota) and John Guest Corp. (Fairfield, New Jersey). The check valves may be of any conventional variety known in the art that ensures one-way flow of fluids and/or gases that flow through the capsules. Examples include those sold by the aforementioned companies. It should further be understood that the male/female configuration of the set of quick-connect couplings incorporated onto a capsule may be all male, all female, or a combination of both depending upon the particular application.

## Claims

1. A filter capsule apparatus (10^{V}) comprising:
a shell having a shell wall (12^{V}), wherein the shell wall has a top end and a bottom end;
a bottom cap (16^{V}) secured to the bottom end of the shell wall (12^{V});
a top cap (14^{V}) secured to the top end of the shell wall (12^{V}), wherein the combination of the shell wall, the bottom cap and the top cap define a filter chamber, wherein the filter chamber has a chamber bottom end proximal to the bottom cap;
at least one filter cartridge (68) secured in the chamber bottom end, wherein the at least one filter cartridge defines at least one downstream outlet core (70);
a plurality of ports including an inlet port (24^{V}) and an outlet port (26^{V}) extending from a top end of the top cap (14^{V});
**characterized by**:
an outlet transfer tube (58) secured in the chamber to the top cap (14^{V}) away from the shell wall (12^{V}) and extending downwardly a portion of the length of the shell wall; wherein the transfer tube is connected to, and in fluid communication with, the outlet port (24^{V}) at a top end, and is connected to, and in fluid communication with, the at least one downstream outlet core (70) at a bottom end;
a porous media boundary sheet (72) having a boundary sheet perimeter, wherein the boundary sheet perimeter is secured along its entire length to the shell wall above the at least one filter cartridge (68) and attached about the outlet transfer tube (58), wherein the combination of the media boundary sheet, outer surface of the outlet transfer tube, inner surface of the shell wall and the top cap form a particulate filter media chamber separate from the bottom end of the filter chamber where the at least one filter cartridge (68) is secured, wherein the porous media boundary sheet (72) permits the passage of liquids and/or gases; and,
particulate media (66) secured in the particulate filter media chamber.

2. The filter capsule of claim 1 wherein the plurality of ports extend from the top cap (14^{V}) in a uniform direction.

3. The filter capsule of claim 2 wherein the plurality of ports occupy substantially the same plane wherein the plane is parallel to a longitudinal axis of the shell (14^{V}).

4. The filter capsule of claim 2 wherein the plurality of ports occupy substantially the same plane wherein the plane is substantially orthogonal to a longitudinal axis of the shell.

5. The filter capsule of claim 2 wherein the plurality of ports occupy substantially the same plane wherein the plane is +/- 45° from a plane orthogonal to a longitudinal axis of the shell.

6. The filter capsule of claim 2 wherein at least one port of the plurality of ports has a quick connect connector secured to an end of the at least one port.

7. The filter capsule of claim 2 wherein at least one port of the plurality of ports has a check valve secured to the at least one port.

8. The filter capsule of claim 1 further comprising an RFID chip (36) secured to the shell.

9. The filter capsule of claim 1 further comprising an RFID chip (36) embedded in material forming the shell.

10. The filter capsule of claim 1 wherein the top cap has portions defining a projection chamber (30), wherein the projection chamber is in fluid communication with one of the plurality of ports.

11. The filter capsule of claim 1 further comprising multiple filter cartridges (68), wherein each filter cartridge of the multiple filter cartridges (68) defines at least one downstream outlet core (70) to form a plurality of outlet cores (70), wherein the multiple filter cartridges (68) are secured in the bottom end of shell (12^{V}) in a multi-round configuration with a manifold (90) connected to the outlet tube (58) and to the plurality of outlet cores (70), wherein the manifold (90) is in fluid communication with outlet tube (58) and the plurality of outlet cores (70).

12. The filter capsule of claim 1 further comprising multiple filter cartridges (68) secured in the bottom end of shell (12^{V}) in a stacked configuration, wherein each filter cartridge of the multiple filter cartridges (68) defines at least one downstream outlet core (70) to form a plurality of outlet cores (70), wherein the plurality of outlet cores (70) are joined together and wherein the plurality of outlet cores (70) are in fluid communication.

13. The filter capsule of claim 1 wherein the porous media boundary sheet (72) has pores, wherein the pores have sizes from about 10 microns to about 500 microns.

14. The filter capsule of claim 1 wherein the particulate media (66) is selected from the group consisting of DI resin, carbon fiber, cotton fiber, granular carbon, polymeric yarn, sand or other natural and/or synthetic granular media and combinations thereof.

## Patentansprüche

1. Filterkapselvorrichtung (10^{V}), umfassend:
ein Gehäuse mit einer Gehäusewand (12^{V}), wobei die Gehäusewand ein oberes Ende und ein unteres Ende aufweist;
eine untere Kappe (16^{V}), die an dem unteren Ende der Gehäusewand (12^{V}) befestigt ist;
eine obere Kappe (14^{V}), die an dem oberen Ende der Gehäusewand (12^{V}) befestigt ist, wobei die Kombination aus der Gehäusewand, der unteren Kappe und der oberen Kappe eine Filterkammer definiert,
wobei die Filterkammer ein unteres Kammerende proximal zu der unteren Kappe aufweist;
mindestens eine Filterpatrone (68), die in dem unteren Ende der Kammer befestigt ist, wobei die mindestens eine Filterpatrone mindestens einen stromabwärtigen Auslasskern (70) definiert;
eine Vielzahl von Öffnungen einschließlich einer Einlassöffnung (24^{V}) und einer Auslassöffnung (26^{V}), die sich von einem oberen Ende der oberen Kappe (14^{V}) erstrecken;
**gekennzeichnet durch**:
ein Auslassübertragungsrohr (58), das in der Kammer an der oberen Kappe (14^{V}) entfernt von der Gehäusewand (12^{V}) befestigt ist und sich über einen Abschnitt der Länge der Gehäusewand nach unten erstreckt; wobei das Übertragungsrohr an einem oberen Ende mit der Auslassöffnung (24^{V}) verbunden ist und mit dieser in Fluidverbindung steht, und an einem unteren Ende mit dem mindestens einen stromabwärtigen Auslasskern (70) verbunden ist und mit diesem in Fluidverbindung steht;
eine poröse Medienbegrenzungsfolie (72) mit einem Begrenzungsfolienumfang, wobei der Begrenzungsfolienumfang über seine gesamte Länge an der Gehäusewand über der mindestens einen Filterpatrone (68) befestigt und um das Auslassübertragungsrohr (58) herum angebracht ist, wobei die Kombination aus der Medienbegrenzungsfolie, der Außenfläche des Auslassübertragungsrohrs, der Innenfläche der Gehäusewand und der oberen Kappe eine Partikelfiltermedienkammer bildet, die von dem unteren Ende der Filterkammer, an dem die mindestens eine Filterpatrone (68) befestigt ist, getrennt ist, wobei die poröse Medienbegrenzungsfolie (72) den Durchgang von Flüssigkeiten und/oder Gasen zulässt; und,
Partikelmedien (66), die in der Partikelfiltermedienkammer gehalten werden.

2. Filterkapsel nach Anspruch 1, wobei sich die Vielzahl von Öffnungen von der oberen Kappe (14^{V}) in einer einheitlichen Richtung erstreckt.

3. Filterkapsel nach Anspruch 2, wobei die Vielzahl von Öffnungen im Wesentlichen dieselbe Ebene einnehmen, wobei die Ebene parallel zu einer Längsachse des Gehäuses (14^{V}) verläuft.

4. Filterkapsel nach Anspruch 2, wobei die Vielzahl von Öffnungen im Wesentlichen dieselbe Ebene einnehmen, wobei die Ebene im Wesentlichen orthogonal zu einer Längsachse des Gehäuses ist.

5. Filterkapsel nach Anspruch 2, wobei die Vielzahl von Öffnungen im Wesentlichen dieselbe Ebene einnehmen, wobei die Ebene +/- 45° von einer Ebene abweicht, die orthogonal zu einer Längsachse des Gehäuses ist.

6. Filterkapsel nach Anspruch 2, wobei mindestens eine Öffnung der Vielzahl von Öffnungen einen Schnellverbindungsstecker aufweist, der an einem Ende der mindestens einen Öffnung befestigt ist.

7. Filterkapsel nach Anspruch 2, wobei mindestens eine Öffnung der Vielzahl von Öffnungen ein an der mindestens einen Öffnung befestigtes Rückschlagventil aufweist.

8. Filterkapsel nach Anspruch 1, ferner umfassend einen an dem Gehäuse befestigten RFID-Chip (36).

9. Filterkapsel nach Anspruch 1, ferner umfassend einen RFID-Chip (36), der in das Material eingebettet ist, aus dem das Gehäuse gebildet ist.

10. Filterkapsel nach Anspruch 1, wobei die obere Kappe Abschnitte aufweist, die eine Projektionskammer (30) definieren, wobei die Projektionskammer in Fluidverbindung mit einer der Vielzahl von Öffnungen steht.

11. Filterkapsel nach Anspruch 1, ferner umfassend mehrere Filterpatronen (68), wobei jede Filterpatrone der mehreren Filterpatronen (68) mindestens einen stromabwärtigen Auslasskern (70) definiert, um eine Vielzahl von Auslasskernen (70) zu bilden, wobei die mehreren Filterpatronen (68) in einer mehrrunden Konfiguration in dem unteren Ende des Gehäuses (12^{V}) befestigt sind, wobei ein Verteiler (90) mit dem Auslassrohr (58) und der Vielzahl von Auslasskernen (70) verbunden ist, wobei der Verteiler (90) in Fluidverbindung mit dem Auslassrohr (58) und der Vielzahl von Auslasskernen (70) steht.

12. Filterkapsel nach Anspruch 1, ferner umfassend mehrere Filterpatronen (68), die in einer gestapelten Konfiguration im unteren Ende des Gehäuses (12^{V}) befestigt sind, wobei jede Filterpatrone der mehreren Filterpatronen (68) mindestens einen stromabwärtigen Auslasskern (70) definiert, um eine Vielzahl von Auslasskernen (70) zu bilden, wobei die Vielzahl von Auslasskernen (70) miteinander verbunden ist und wobei die Vielzahl von Auslasskernen (70) in Flüssigkeitsverbindung steht.

13. Filterkapsel nach Anspruch 1, wobei die poröse Medienbegrenzungsfolie (72) Poren aufweist, wobei die Poren Größen von etwa 10 Mikrometer bis etwa 500 Mikrometer aufweisen.

14. Filterkapsel nach Anspruch 1, wobei das Partikelmedium (66) aus der Gruppe ausgewählt ist, die aus DI-Harz, Kohlenstofffaser, Baumwollfaser, granuliertem Kohlenstoff, Polymergarn, Sand oder anderen natürlichen und/oder synthetischen granulierten Medien und Kombinationen davon besteht.

## Revendications

1. Appareil à capsule filtrante (10^{V}) comprenant :
une enveloppe ayant une paroi d'enveloppe (12^{V}), dans lequel la paroi d'enveloppe a une extrémité supérieure et une extrémité inférieure ;
un bouchon inférieur (16^{V}) fixé à l'extrémité inférieure de la paroi d'enveloppe (12^{V}) ;
un bouchon supérieur (14^{V}) fixé à l'extrémité supérieure de la paroi d'enveloppe (12^{V}), dans lequel la combinaison de la paroi d'enveloppe, du bouchon inférieur et du bouchon supérieur définit une chambre filtrante, dans lequel la chambre filtrante a une extrémité inférieure de chambre proximale par rapport au bouchon inférieur ;
au moins une cartouche filtrante (68) fixée dans l'extrémité inférieure de chambre, dans lequel l'au moins une cartouche filtrante définit au moins un noyau de sortie en aval (70) ;
une pluralité d'orifices comportant un orifice d'entrée (24^{V}) et un orifice de sortie (26^{V}) s'étendant à partir d'une extrémité supérieure du bouchon supérieur (14^{1V}) ;
**caractérisé par** :
un tube de transfert de sortie (58) fixé dans la chambre au bouchon supérieur (14^{V}) à l'écart de la paroi d'enveloppe (12^{V}) et s'étendant vers le bas sur une partie de la longueur de la paroi d'enveloppe ; dans lequel le tube de transfert est relié à l'orifice de sortie (24^{V}) et en communication fluidique avec celui-ci au niveau d'une extrémité supérieure, et est relié à l'au moins un noyau de sortie en aval (70) et en communication fluidique avec celui-ci au niveau d'une extrémité inférieure ;
une feuille de délimitation de milieu poreux (72) ayant un périmètre de feuille de délimitation, dans lequel le périmètre de feuille de délimitation est fixé sur toute sa longueur à la paroi d'enveloppe au-dessus de l'au moins une cartouche filtrante (68) et attaché autour du tube de transfert de sortie (58), dans lequel la combinaison de la feuille de délimitation de milieu, une surface extérieure du tube de transfert de sortie, une surface intérieure de la paroi d'enveloppe et le capuchon supérieur forment une chambre filtrante de milieu de particules séparée de l'extrémité inférieure de la chambre filtrante où l'au moins une cartouche filtrante (68) est fixée, dans lequel la feuille de délimitation de milieu poreux (72) permet le passage de liquides et/ou de gaz ; et,
le milieu particulaire (66) fixé dans la chambre de milieu filtrant particulaire.

2. Capsule filtrante selon la revendication 1 dans laquelle la pluralité d'orifices s'étend à partir du bouchon supérieur (14^{V}) dans une direction uniforme.

3. Capsule filtrante selon la revendication 2, dans laquelle la pluralité d'orifices occupe sensiblement le même plan, dans laquelle le plan est parallèle à un axe longitudinal de l'enveloppe (14^{V}).

4. Capsule filtrante selon la revendication 2, dans laquelle la pluralité d'orifices occupe sensiblement le même plan, dans laquelle le plan est sensiblement orthogonal à un axe longitudinal de l'enveloppe.

5. Capsule filtrante selon la revendication 2, dans laquelle la pluralité d'orifices occupe sensiblement le même plan, dans laquelle le plan est à +/- 45° d'un plan orthogonal à l'axe longitudinal de l'enveloppe.

6. Capsule filtrante selon la revendication 2, dans laquelle au moins un orifice de la pluralité d'orifices a un élément de liaison à liaison rapide fixé à une extrémité de l'au moins un orifice.

7. Capsule filtrante selon la revendication 2, dans laquelle au moins un orifice de la pluralité d'orifices a un clapet anti-retour fixé à l'au moins un orifice.

8. Capsule filtrante selon la revendication 1, comprenant en outre une puce RFID (36) fixée à l'enveloppe.

9. Capsule filtrante selon la revendication 1, comprenant en outre une puce RFID (36) intégrée dans un matériau formant l'enveloppe.

10. Capsule filtrante selon la revendication 1, dans laquelle le bouchon supérieur a des parties définissant une chambre de projection (30), dans laquelle la chambre de projection est en communication fluidique avec l'un de la pluralité d'orifices.

11. Capsule filtrante selon la revendication 1, comprenant en outre de multiples cartouches filtrantes (68), dans laquelle chaque cartouche filtrante des multiples cartouches filtrantes (68) définit au moins un noyau de sortie en aval (70) pour former une pluralité de noyaux de sortie (70), dans laquelle les multiples cartouches filtrantes (68) sont fixées dans l'extrémité inférieure de l'enveloppe (12^{V}) dans une configuration multi-tour avec un collecteur (90) relié au tube de sortie (58) et à la pluralité de noyaux de sortie (70), dans laquelle le collecteur (90) est en communication fluidique avec le tube de sortie (58) et la pluralité de noyaux de sortie (70).

12. Capsule filtrante selon la revendication 1, comprenant en outre de multiples cartouches filtrantes (68) fixées à l'extrémité inférieure de l'enveloppe (12^{V}) dans une configuration empilée, dans laquelle chaque cartouche filtrante des multiples cartouches filtrantes (68) définit au moins un noyau de sortie en aval (70) pour former une pluralité de noyaux de sortie (70), dans laquelle la pluralité de noyaux de sortie (70) sont joints ensemble et dans laquelle la pluralité de noyaux de sortie (70) sont en communication fluidique.

13. Capsule filtrante selon la revendication 1, dans laquelle la feuille de délimitation de milieu poreux (72) a des pores, dans laquelle les pores ont une taille comprise entre environ 10 microns et environ 500 microns.

14. Capsule filtrante selon la revendication 1, dans laquelle le milieu particulaire (66) est choisi dans le groupe constitué de résine DI, de fibre de carbone, de fibre de coton, de carbone granulaire, de fil polymère, de sable ou d'autres milieux granulaires naturels et/ou synthétiques et de combinaisons de ceux-ci
